# EUROPÄISCHE PATENTSCHRIFT

(11) **EP 3 298 594 B1**
(45) Veröffentlichungstag und Bekanntmachung des Hinweises auf die Patenterteilung: **10.01.2024**
(21) Anmeldenummer: 16723940.9
(22) Anmeldetag: 20.05.2016
(51) Int. Cl.: G06F 3/01, G07D 11/20, G07D 11/22, G07D 11/50

(54) **SYSTEM UND VERFAHREN ZUR BEARBEITUNG VON WERTDOKUMENTEN**
SYSTEM AND METHOD FOR PROCESSING VALUE DOCUMENTS
SYSTÈME ET PROCÉDÉ DE TRAITEMENT DE DOCUMENTS DE VALEUR

(30) Priorität: 22.05.2015 DE 102015006664
(43) Veröffentlichungstag der Anmeldung: 28.03.2018
(73) Patentinhaber: Giesecke+Devrient Currency Technology GmbH, 81677 München (DE)
(72) Erfinder: SCHMIDT, Alfred, 81377 München (DE); STAPFER, Michael, 85579 Neubiberg (DE); HERTEL, Manfred, 81379 München (DE); LANGLOTZ, Matthias, 85662 Hohenbrunn (DE); EISEN, Bernhard, 80686 München (DE)
(74) Vertreter: Giesecke + Devrient IP
(86) Internationale Anmeldenummer: PCT/EP2016/000848
(87) Internationale Veröffentlichungsnummer: WO 2016/188627

(56) Entgegenhaltungen:
- EP-A1- 2 642 331
- WO-A1-2015/043762
- DE-A1- 10 154 342
- DE-A1-102012 014 995
- DE-A1-102012 219 814
- US-B1- 6 771 294

## Beschreibung

Die Erfindung bezieht sich auf das Gebiet der Wertdokumentenbearbeitungssysteme. Ein solches System nach dem Oberbegriff von Anspruch 1 wird in dem Dokument DE 101 54 342 A1 gezeigt.

In Banknotenbearbeitungssystemen werden Banknoten hinsichtlich verschiedener Eigenschaften, wie z.B. Druckbild, Stückelung, Echtheit und Zustand, geprüft und abhängig vom Ergebnis der Prüfung unterschiedlich behandelt. Beispielsweise werden bei der Prüfung als echt eingestufte Banknoten wieder in den Umlauf gegeben, sofern diese gleichzeitig bestimmte Fitnesskriterien erfüllen. Dagegen werden als unecht oder fälschungsverdächtig eingestufte Banknoten aus dem Verkehr gezogen und verschmutzte, abgenutzte oder defekte Banknoten einem Schredder zur Vernichtung zugeführt. Ein derartiges System wird in WO 2015/043762 A1 beschrieben, das über eine mit dem System verbundene Benutzerschnittstelle bedient wird.

Trotz des hohen Automatisierungsgrades bei der Bearbeitung von Banknoten ist in der Regel eine Interaktion zwischen einer Bedienperson und dem Banknotenbearbeitungssystem erforderlich, um z.B. den Betriebszustand des Systems oder die Bearbeitung der Banknoten zu überwachen und gegebenenfalls Steuerungsbefehle zur Steuerung der Bearbeitung eingeben zu können. Die hierbei üblicherweise vorgesehenen Benutzerschnittstellen weisen jedoch nicht in allen Anwendungsfällen den jeweils erforderlichen Grad an Ergonomie auf.

Aus der DE 10 2012 014995 A1 ist zudem Augmented-Reality-System bekannt, bei dem Ergänzungsbilddaten aus CAD-Daten erzeugt werden.

Es ist Aufgabe der Erfindung, ein System sowie ein Verfahren zur Bearbeitung von Wertdokumenten anzugeben, welches eine in ergonomischer Hinsicht verbesserte Kommunikation zwischen Bedienperson und Bearbeitungsvorrichtung ermöglicht.

Diese Aufgabe wird durch das System und Verfahren gemäß den unabhängigen Ansprüchen gelöst.

Das erfindungsgemäße Wertdokumentenbearbeitungssystem, insbesondere für Banknoten, weist eine Vorrichtung zum Bearbeiten, wobei das Bearbeiten Befördern und/oder Prüfen und/oder Zählen und/oder Sortieren von Wertdokumenten umfasst, sowie eine tragbare Benutzerschnittstelle auf, welche dazu ausgebildet ist, Informationen, welche die Vorrichtung und/oder die Bearbeitung der Wertdokumente betreffen, zu empfangen, ein oder mehrere Bilder der Vorrichtung mittels einer Kamera zu erfassen und die empfangenen Informationen und/ oder erfassten Bilder wiederzugeben, wobei
die jeweils wiedergegebene Information davon abhängt, welches Objekt, insbesondere welcher Ausschnitt oder Teil der Vorrichtung, von der Kamera aufgenommen wird, und die angezeigte Information den von der Kamera aufgenommenen Bereich der Vorrichtung betrifft.

Das erfindungsgemäße Verfahren beinhaltet die Merkmale des unabhängigen Anspruchs 10.

Die Erfindung basiert auf dem Ansatz, zur Bedienung von Wertdokumentbearbeitungsvorrichtungen eine oder mehrere Benutzerschnittstellen vorzusehen, die mobil bzw. portabel ausgestaltet sind, d.h. von einer Bedienperson getragen oder mitgeführt werden können, und Informationen empfangen, Bilder erfassen und die empfangenen Informationen und/ oder erfassten Bilder wiedergeben können. Bei den empfangenen Informationen handelt es sich insbesondere um Informationen, welche die zu bedienende Wertpapierbearbeitungsvorrichtung, z.B. deren Betriebszustand, und/oder die Bearbeitung von Wertdokumenten, z.B. Beginn und Ende der Bearbeitung oder Wertpapierstau, in der zu bedienenden Vorrichtung betreffen. Die Benutzerschnittstelle ist insbesondere dazu ausgebildet, Bilder von der Vorrichtung und/ oder von den von einer Bedienperson im Zusammenhang mit der Bearbeitung der Wertdokumente vorgenommenen Handlungen zu erfassen.

Die tragbare Benutzerschnittstelle ist so ausgestaltet, dass die empfangenen Informationen im Gesichtsfeld einer Bedienperson wiedergegeben werden, so dass die Bedienperson bei einem Blick beispielsweise auf einen Ausschnitt der Bearbeitungsvorrichtung Zusatzinformationen angezeigt bekommt, die im Zusammenhang mit dem jeweils betrachteten Ausschnitt der Vorrichtung stehen. Unter dem Gesichtsfeld einer Bedienperson sind hierbei alle zentralen und peripheren Punkte und Gegenstände des Außenraums zu verstehen, die bei geradeaus und/oder schräg gerichtetem Blick visuell wahrgenommen werden können, auch ohne sie direkt zu fixieren.

Bei einer anderen beispielhaften Ausgestaltung ist die tragbare Benutzerschnittstelle als mobiles Endgerät ausgestaltet, wie z.B. als Tablet-Computer oder Smartphone, an dessen Display ein von einem Ausschnitt der Bearbeitungsvorrichtung mit dem mobilen Endgerät erfasstes Bild zusammen mit betreffenden Zusatzinformationen wiedergegeben wird.

In beiden Fällen erhält die Bedienperson somit zusätzlich zum jeweils betrachteten Ausschnitt bzw. aufgenommenen Bild des Ausschnitts der Vorrichtung Zusatzinformationen, ohne dass der Blick vom betrachteten Ausschnitt bzw. vom betrachteten Bild des Ausschnitts abgewandt und auf eine etwa an der Vorrichtung selbst befindliche Anzeigeeinrichtung gerichtet werden müsste. Dies ist gerade in Situationen von besonderem Vorteil, in denen die Bedienperson anhand von Zusatzinformationen zur Ausführung bestimmter Handlungen aufgefordert bzw. angeleitet wird, beispielsweise bei der Behebung eines bei der Bearbeitung der Wertpapiere aufgetretenen Staus.

Je nach konkreter Ausgestaltung der Benutzerschnittstelle bildet also das nicht ortsfeste Gesichtsfeld der Bedienperson bzw. das nicht ortsfeste Sichtfeld einer an der Benutzerschnittstelle zur Bilderfassung vorgesehenen Kamera einen mit dem Blick der Bedienperson bzw. dem Sichtfeld der Kamera beweglichen Ausgabebereich zur visuellen Ausgabe von Zusatzinformationen, so dass die Bedienperson die betreffenden Zusatzinformationen besonders leicht erfassen kann.

Durch die Erfindung wird somit die Kommunikation zwischen Bedienperson und Bearbeitungsvorrichtung in ergonomischer Hinsicht verbessert.

Vorzugsweise ist die tragbare Benutzerschnittstelle dazu ausgestaltet, eine Eingabe und/oder Auswahl von Informationen, insbesondere zur Steuerung der Vorrichtung, durch eine Bedienperson zu ermöglichen. Dadurch kann die Vorrichtung von jedem beliebigen Ort aus von der Bedienperson bedient werden.

Es ist ferner bevorzugt, dass die tragbare Benutzerschnittstelle eine am Kopf einer Bedienperson anbringbare Anzeigeeinrichtung, insbesondere in der Form einer Brille, aufweist, welche dazu ausgebildet ist, die empfangenen Informationen in zumindest einem Teil des Gesichtsfeldes der Bedienperson visuell wiederzugeben. Die Benutzerschnittstelle ist vorzugsweise als sog. Head-Mounted Display (HMD) ausgebildet, durch welches Bilder, Symbole oder andere Zeichen auf einem augennahen Bildschirm dargestellt oder mittels virtueller Netzhautanzeige direkt auf die Netzhaut projiziert werden. Je nach konkreter Ausgestaltung handelt es sich bei dem HMD um eine Daten- oder Videobrille, ein Helmdisplay oder einen Virtual Reality-Helm (VR-Helm).

Die tragbare Benutzerschnittstelle weist eine Kamera auf, welche dazu ausgebildet ist, Bilder von im Gesichtsfeld der Bedienperson befindlichen Objekten zu erfassen. Vorzugsweise ist die tragbare Benutzerschnittstelle dazu ausgebildet, in den, insbesondere mit der Kamera, erfassten Bildern eine von der Bedienperson ausgeübte Geste, insbesondere eine Handgeste, zu erkennen und daraus entsprechende Informationen, insbesondere zur Steuerung der Vorrichtung, abzuleiten. Durch eine solche Gestensteuerung können Daten bzw. Steuerungsbefehle auf bequeme Weise eingegeben werden, ohne dass die Bedienperson hierzu in Reichweite von einer an der Vorrichtung angebrachten Eingabeeinrichtung, z.B. einem Touchscreen, zu sein braucht.

Vorzugsweise ist die tragbare Benutzerschnittstelle ferner dazu ausgebildet, im Gesichtsfeld der Bedienperson ein Eingabeschema, insbesondere in Form einer Tastatur oder von Symbolen, wiederzugeben, und in den erfassten Bildern eine von der Bedienperson in Bezug auf das wiedergegebene Eingabeschema ausgeübte Geste einer Eingabe- und/ oder Auswahl zu erkennen und daraus entsprechende Informationen, insbesondere zur Steuerung der Vorrichtung, abzuleiten. Es ist bevorzugt, dass die tragbare Benutzerschnittstelle eine Projektionseinrichtung aufweist, welche dazu ausgebildet ist, das Eingabeschema auf eine Fläche, insbesondere eine Hand der Bedienperson oder eine Fläche in der Umgebung der Bedienperson, zu projizieren. Die Projektionseinrichtung ist z.B. als Laserprojektor ausgebildet, bei welchem mittels Laserstrahl ein virtuelles Tastenfeld oder Symbol auf eine Fläche projiziert wird. Die Bedienperson hat dadurch das Eingabeschema, z.B. in Form einer Tastatur bzw. von Symbolen, bei der Eingabe stets im Gesichtsfeld und kann durch entsprechende Handgesten, wie z.B. einem virtuellen Antippen des im Gesichtsfeld wiedergegebenen Symbols bzw. einer Taste, eine Dateneingabe bzw. Auswahl vornehmen.

Bei einer weiteren bevorzugten Ausgestaltung ist die tragbare Benutzerschnittstelle dazu ausgebildet, ein Bild von einem im Gesichtsfeld der Bedienperson befindlichen Objekt, insbesondere einem Wertdokument, einem Transportbehälter für Wertdokumente oder einer Trennkarte, zu erfassen und anhand des erfassten Bildes eine auf dem Objekt befindliche Zusatzinformation zu ermitteln. Beispielsweise ist die Zusatzinformation als codierte Information, z.B. in Form von Barcodes, oder im Klartext, wie z.B. in Form alphanumerischer Zeichen, auf dem Objekt aufgebracht. Die Benutzerschnittstelle eröffnet dadurch zusätzlich die Möglichkeit einer maschinellen Erfassung von auf Objekten befindlichen Zusatzinformationen.

Vorzugsweise ist die tragbare Benutzerschnittstelle als ein mobiles Endgerät, insbesondere als Tablet-Computer, Datenbrille oder Smartphone, ausgestaltet, welches dazu ausgebildet ist, mindestens ein Bild von der Vorrichtung oder eines Teils der Vorrichtung zu erfassen und die empfangenen Informationen, welche die Vorrichtung bzw. den Teil der Vorrichtung und/oder die Bearbeitung der Wertdokumente betreffen, zusammen mit dem erfassten Bild der Vorrichtung wiederzugeben. In Analogie zu einem Head-Mounted Device erhält die Bedienperson somit zusätzlich zum jeweils aufgenommenen Bild der Vorrichtung Zusatzinformationen, ohne dass der Blick vom betrachteten Bild an eine etwa an der Vorrichtung selbst befindliche Anzeigeeinrichtung abgewandt werden muss.

Weitere Vorteile, Merkmale und Anwendungsmöglichkeiten der vorliegenden Erfindung ergeben sich aus der nachfolgenden Beschreibung in Zusammenhang mit den Figuren. Es zeigen:
- Fig. 1: ein Beispiel eines Systems zur Bearbeitung von Wertdokumenten;
- Fig. 2: ein erstes Beispiel einer Handgeste im Gesichtsfeld einer Bedienperson;
- Fig. 3: ein zweites Beispiel einer Handgeste im Gesichtsfeld einer Bedienperson;
- Fig. 4: ein Beispiel eines im Gesichtsfeld einer Bedienperson wiedergegebenen Eingabeschemas;
- Fig. 5: ein Beispiel eines im Gesichtsfeld einer Bedienperson befindlichen Objekts, auf welchem sich Zusatzinformationen in Form von Barcodes befinden; und
- Fig. 6: ein Beispiel eines Anwendungsfalles eines Systems zur Bearbeitung von Wertdokumenten mit einer Benutzerschnittstelle in Form eines einem mobilen Endgeräts.

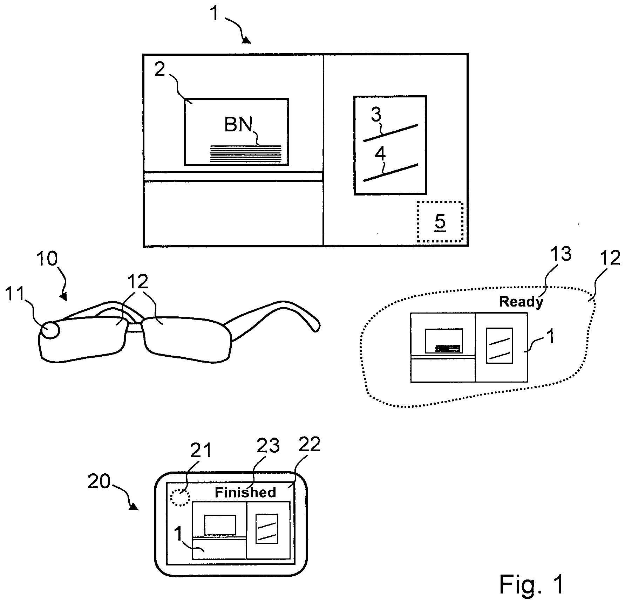

Fig. 1 zeigt ein Beispiel eines Systems zur Bearbeitung von Wertdokumenten mit einer Wertdokumentbearbeitungsvorrichtung 1, welche im Folgenden auch als "Vorrichtung" bezeichnet wird, und mindestens einer tragbaren Benutzerschnittstelle, die im vorliegenden Beispiel als sogenannte Datenbrille 10 und/ oder Tablet-Computer 20 ausgebildet ist.

Die Vorrichtung 1 weist ein Eingabefach 2 auf, in welches ein oder mehrere Stapel von zu bearbeitenden Wertdokumenten, insbesondere Banknoten BN, durch eine Bedienperson oder eine für diesen Zweck vorgesehene Eingabeeinrichtung eingegeben und für die weitere Bearbeitung bereitgestellt werden können.

Mithilfe eines Vereinzelers wird die jeweils eine Banknote des eingegebenen Stapels abgezogen und an eine Transporteinrichtung übergeben, welche die Banknote zu einer Sensoreinrichtung befördert, in welcher deren physikalische Eigenschaften erfasst und daraus Eigenschaften der Banknote, wie zum Beispiel Druckbild, Stückelung, Echtheit und Zustand, abgeleitet werden. In Abhängigkeit von den ermittelten Eigenschaften wird die Banknote einem Ausgabefach 3 oder 4 zugeführt und dort abgelegt. Optional kann auch ein Schredder vorgesehen sein, an welchen Banknoten mit bestimmten Eigenschaften, wie z.B. unzureichender Fitness, direkt zur Vernichtung weitergeleitet werden.

Die vorstehend nur in groben Zügen beschriebenen Vorgänge bei der Bearbeitung von Banknoten BN in der Vorrichtung 1 werden von einer Steuerungseinrichtung 5 gesteuert, die in vorzugsweise kontaktloser Datenkommunikation mit der Benutzerschnittstelle 10 bzw. 20 steht, an welcher einerseits Informationen zum Banknotenbearbeitungsvorgang und/ oder an eine Bedienperson gerichtete Anweisungen visuell wiedergegeben werden und andererseits Daten und/ oder Steuerungsbefehle zur Steuerung der Banknotenbearbeitung in der Vorrichtung 1 durch die Bedienperson eingegeben werden können. Eine drahtlose Datenverbindung zwischen Steuerungseinrichtung 5 und Benutzerschnittstelle 10 bzw. 20 kann beispielsweise mittels Bluetooth-Standard oder WLAN erfolgen.

Eine als Datenbrille 10 ausgebildete Benutzerschnittstelle weist einen im Wesentlichen brillenartig geformten Träger auf, an welchem eine Kamera 11 zur Aufnahme von Bildern der Umgebung vorgesehen ist. Die Kamera 11 ist vorzugsweise so angeordnet und/oder ausgestaltet, dass insbesondere ein im Gesichtsfeld der Bedienperson, welche die Datenbrille 10 trägt, liegender Bereich der Umgebung aufgenommen wird.

Die Datenbrille 10 weist ferner eine, im vorliegenden Beispiel nur schematisch angedeutete, Anzeigeeinrichtung 12 auf, durch welche Informationen, die beispielsweise von der Steuerungseinrichtung 5 an die Datenbrille 10 übermittelt werden, visuell wiedergegeben werden, so dass die Bedienperson diese Informationen wahrnehmen kann.

Zu diesem Zweck kann die Anzeigeeinrichtung 12 beispielsweise als semitransparentes Display ausgebildet sein, welches einerseits einen direkten Blick der Bedienperson auf die Umgebung, insbesondere auf die Vorrichtung 1, und andererseits ein Einblenden von Zusatzinformationen in das Gesichtsfeld der Bedienperson ermöglicht.

Je nach Anwendungsfall kann es vorteilhaft sein, die Anzeigeeinrichtung 12 lediglich in bestimmten Bereichen des Gesichtsfeldes der Bedienperson, wie zum Beispiel im Randbereich, vorzusehen und/ oder die Anzeigeeinrichtung 12 so anzusteuern, dass diese nur in bestimmten Bereichen des Gesichtsfeldes, wie etwa dem Randbereich, der Bedienperson Informationen ausgibt.

Ferner ist es möglich, die Anzeigeeinrichtung 12 als Projektionseinrichtung auszugestalten, durch welche die jeweils wiederzugebenden Informationen direkt auf das Auge bzw. die Netzhaut der Bedienperson projiziert werden.

Ungeachtet der konkreten Ausgestaltung der Anzeigeeinrichtung 12 können auf diese Weise Zusatzinformationen 13 im Gesichtsfeld der Bedienperson - und damit unabhängig von der aktuellen Blickrichtung - visualisiert und von der Bedienperson zusammen mit dem jeweils betrachteten Objekt, im dargestellten Beispiel also der Vorrichtung 1, betrachtet werden.

Aus Anschaulichkeitsgründen ist in der vorliegenden Darstellung lediglich der Blick der Bedienperson durch die linke Brillenglasfassung und die mittels Anzeigeeinrichtung 12 wiedergegebene Zusatzinformation 13 dargestellt. Sofern auch die rechte Brillenglasfassung der Datenbrille 10 mit einer entsprechenden Anzeigeeinrichtung 12 versehen ist, so kann die Bedienperson auch mit dem rechten Auge zusätzlich zur Vorrichtung 1 die betreffende Zusatzinformation 13 wahrnehmen.

Bei der Datenbrille 10 kann es sich grundsätzlich um jede Art von am Kopf einer Bedienperson anbringbaren Anzeigeeinrichtungen, sogenannten Head-Mounted Displays (HMD) handeln, welche Informationen und/ oder Bilder in das Gesichtsfeld der Bedienperson einblenden und so der Bedienperson Zusatzinformationen liefern können.

Optional kann die Datenbrille 10 mit Bewegungssensoren ausgestattet sein, um das jeweils eingespeiste Bild bzw. die Zusatzinformationen mit der Kopf- oder Augenbewegung der Bedienperson zu synchronisieren.

Grundsätzlich kann die Datenbrille 10 zusätzlich dazu ausgelegt sein, Sprache und andere kontextbezogene akustische Informationen auszugeben.

Alternativ oder zusätzlich zur Datenbrille 10 kann als Benutzerschnittstelle ein mobiles Endgerät, beispielsweise in Form eines Tablet-Computers 20 oder etwa eines Smartphones, verwendet werden, das neben einer auf der Rückseite befindlichen Kamera 21 ein auf der Vorderseite befindliches Display 22 aufweist, an welchem die mit der Kamera 21 erfassten Bilder wiedergegeben werden können. Im vorliegenden Beispiel zeigt das Display 22 ein von der gesamten Vorrichtung 1 aufgenommenes Bild zusammen mit Zusatzinformationen 23, welche die Vorrichtung 1 oder den in der Vorrichtung 1 ablaufenden Bearbeitungsvorgang betreffen.

Die Benutzerschnittstelle 10 bzw. 20 ist so ausgestaltet und/ oder wird so gesteuert, dass Zusatzinformationen 13 bzw. 23 in Abhängigkeit von der Blickrichtung der Bedienperson und/ oder der Kamera 11 bzw. 21 wiedergegeben werden. Die jeweils angezeigte Zusatzinformation 13 bzw. 23 hängt hierbei davon ab, welches Objekt, insbesondere welcher Ausschnitt oder Teil der Vorrichtung 1, von der Bedienperson betrachtet bzw. mittels Kamera 11 bzw. 21 aufgenommen wird. Der Bedienperson werden hierdurch auf leicht erfassbare Weise Informationen zur Kenntnis gebracht, die den jeweils betrachteten bzw. mit der Kamera 11 bzw. 21 erfassten Bereich der Vorrichtung 1 betreffen. So können an der Benutzerschnittstelle 10 bzw. 20 beispielsweise Daten zum aktuell beobachteten Bearbeitungsprozess angezeigt oder Hinweise gegeben werden, z.B. dass das aktuell betrachtete Ausgabefach 3 oder 4 zu leeren ist oder dass in Kürze Banknoten im Eingabefach 2 nachzulegen sind. Die Bedienperson braucht also nicht auf ein etwa am Gehäuse der Vorrichtung 1 vorgesehenes Display zu blicken, um beispielsweise Fehler- oder Statusmeldungen der Vorrichtung 1 bzw. Handlungsanweisungen zur Kenntnis nehmen zu können.

Ferner ist es auch möglich, mithilfe einer derart ausgestalteten Benutzerschnittstelle 10 bzw. 20 einer Bedienperson im Rahmen eines sogenannten Remote Service eine Unterstützung bei der Durchführung von Reparaturarbeiten an der Vorrichtung 1 zu geben, indem die jeweils von der Kamera 11 bzw. 21 aufgenommenen Bilder an eine an einem entfernt liegenden Ort befindliche Servicestation übermittelt und dort von einem Servicemitarbeiter begutachtet werden, welcher der Bedienperson an der betreffenden Vorrichtung 1 vor Ort dann die für die Reparaturarbeiten erforderlichen Anweisungen in Form von eingeblendeten Informationen 13 bzw. 23 und/ oder akustischen Informationen gibt.

Alternativ oder zusätzlich zu den vorstehend beschriebenen Ausgestaltungsmöglichkeiten der Datenbrille 10 ist es auch möglich, mit der an der Datenbrille 10 befindlichen Kamera 11 die von der Bedienperson im Zusammenhang mit der Bedienung der Vorrichtung 1 ausgeführten Tätigkeiten aufzuzeichnen und als Videostream in einer Datenbank (nicht dargestellt) zusammen mit anderen Bearbeitungsdaten dem jeweiligen Deposit zuzuordnen und zu speichern, so dass etwaige Manipulationen durch die Bedienperson auch im Nachhinein zuverlässig nachvollzogen werden können. Bei dieser Ausführung kann es erwünscht sein, dass in der Anzeigeeinrichtung 12 der Datenbrille 10 während der Aufzeichnung der Tätigkeiten der Bedienperson ein entsprechendes Symbol, beispielsweise "REC", visuell wiedergegeben wird.

Wie bereits erwähnt, ist die Benutzerschnittstelle 20 nicht nur dazu ausgebildet, Zusatzinformationen im Gesichtsfeld der Bedienperson bzw. zusammen mit dem aufgenommenen Bild der Vorrichtung 1 wiederzugeben, sondern vorzugsweise auch dazu ausgelegt, eine Eingabe oder Auswahl von Informationen, insbesondere in Form von Steuerbefehlen zur Steuerung der Vorrichtung 1, durch eine Bedienperson zu ermöglichen. Dies wird im Folgenden näher beschrieben.

Vorzugsweise ist die Datenbrille 10 zu diesem Zweck dazu ausgebildet, eine im Gesichtsfeld der Bedienperson ausgeübte Geste mit der Kamera 11 zu erfassen und diese als eine einzugebende Information zu interpretieren bzw. zu identifizieren.

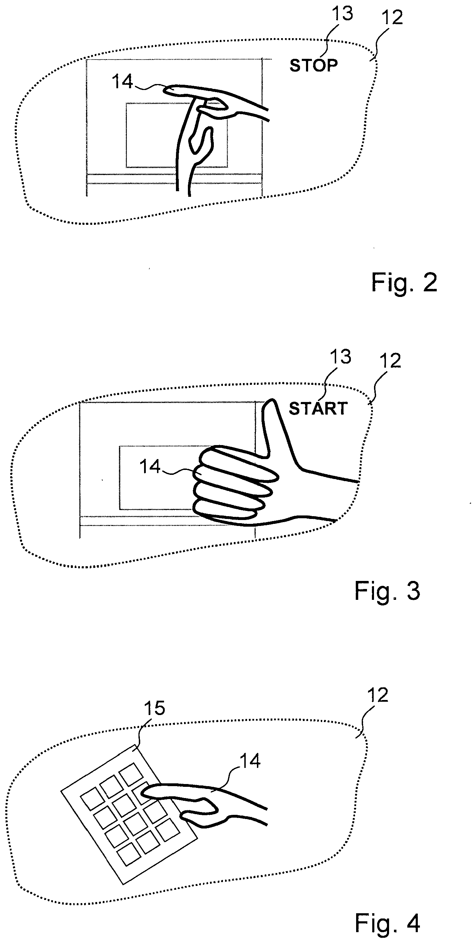

Fig. 2 zeigt ein erstes Beispiel einer von einer Bedienperson ausgeübten Handgeste 14, welche von der Kamera 11 aufgezeichnet und in einer Auswertungseinrichtung (nicht dargestellt) als Stopp-Befehl interpretiert wird, was im vorliegenden Beispiel durch Ausgabe von "STOP" als Zusatzinformation 13 im Gesichtsfeld der Bedienperson bestätigt wird.

Das in Fig. 3 gezeigte zweite Beispiel einer Handgeste 14 dagegen wird als Start-Befehl identifiziert, welcher ebenfalls durch eine visuelle Wiedergabe einer entsprechenden Zusatzinformation 13 ("START") bestätigt wird.

Durch vorzugsweise drahtlose Übermittlung der jeweils identifizierten Steuerungsbefehle an die Steuerungseinrichtung 5 kann eine Steuerung der Vorrichtung 1 entsprechend der jeweils eingegebenen Befehle erfolgen.

Alternativ oder zusätzlich zur vorstehend beschriebenen Gestensteuerung kann, wie in Fig. 4 beispielhaft gezeigt, die Datenbrille 10 dazu ausgebildet sein, im Gesichtsfeld der Bedienperson ein Eingabeschema 15 zu visualisieren, die von der Bedienperson in Bezug auf das Eingabeschema 15 ausgeführten Gesten 14 mittels Kamera 11 zu erfassen und daraus die jeweils einzugebenden Informationen abzuleiten.

Im vorliegenden Beispiel hat das eingeblendete Eingabeschema 15 die Form einer Tastatur oder eines Zahlenblocks, welche bzw. welcher beispielsweise mittels einer Projektionseinrichtung auf eine beliebige Fläche im Gesichtsfeld der Bedienperson projiziert wird, beispielsweise eine Tischfläche oder auch eine Handfläche der Bedienperson.

Alternativ ist es aber auch möglich, das Eingabeschema 15 mithilfe der vorstehend bereits näher beschriebenen Anzeigeeinrichtung 12 zu visualisieren.

Alternativ oder zusätzlich zu einer Tastatur für die Eingabe von Buchstaben oder Zahlen kann das Eingabeschema 15 aber auch symbolartig ausgestaltete Auswahlelemente, sogenannte Icons, enthalten, durch deren virtuelle Betätigung mittels Handgeste 14 eine entsprechende Funktion oder Anweisung zur Steuerung der Vorrichtung 1 ausgewählt werden kann.

Analog zu der oben beschriebenen Anzeige von Zusatzinformationen im Gesichtsfeld, die unabhängig ist vom aktuellen Blick der Bedienperson, wird bei dieser Ausführung ebenfalls der Vorteil erzielt, dass die Bedienperson ihren Blick nicht auf ein etwa am Gehäuse der Vorrichtung 1 befindliches Eingabeelement richten und dieses durch Berühren mit der Hand bedienen muss, sondern eine Eingabe bzw. Auswahl von Informationen unabhängig vom aktuellen Blick der Bedienperson und ohne Bindung an ein ortsfest angeordnetes Eingabeelement möglich ist.

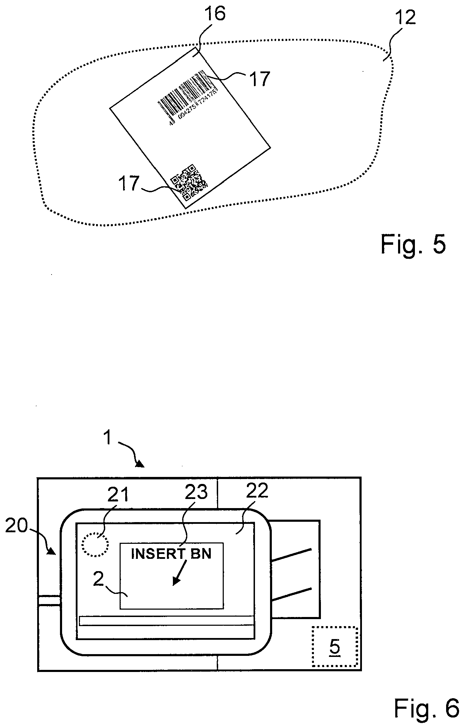

Fig. 5 zeigt ein Beispiel eines im Gesichtsfeld einer Bedienperson befindlichen Objekts 16, auf welchem sich Zusatzinformationen in Form von Barcodes 17 befinden. Bei dem Objekt 16 kann es sich beispielsweise um ein Wertdokument, einen Transportbehälter für Wertdokumente oder eine Trennkarte zur Trennung unterschiedlicher Deposits von Wertdokumenten oder Banknoten handeln. Vorzugsweise kann die Datenbrille 10 dazu ausgelegt sein, das im Gesichtsfeld der Bedienperson befindliche Objekt 16 einschließlich der darauf befindlichen Barcodes 17 oder etwaiger anderer codierter oder uncodierter Informationen zu erfassen und anhand der erfassten Bilder die in den Barcodes 17 bzw. in den anderen Informationen enthaltenen Daten zu ermitteln. Die hierbei erhaltenen Daten können beispielsweise an der Anzeigeeinrichtung 12 in der vorstehend beschriebenen Weise wiedergegeben und/ oder an die Steuerungseinrichtung 5 oder eine Speichereinrichtung (nicht dargestellt) zur Weiterverarbeitung bzw. Speicherung weitergeleitet werden. Die Datenbrille 10 übernimmt bei dieser Ausführung also auch die Funktion eines Datenscanners. Vorzugsweise ist die Datenbrille 10 so ausgestaltet, dass ein Scanprozess durch eine Geste, insbesondere Handgeste, und/ oder einen Sprachbefehl der Bedienperson gestartet und/oder beendet werden kann.

Bevorzugte Ausgestaltungen der tragbaren Benutzerschnittstelle wurden vorstehend im Zusammenhang mit den Figuren 2 bis 5 anhand einer entsprechend ausgestalteten Datenbrille 10 beschrieben. Die vorstehenden Ausführungen gelten jedoch auch für ein mobiles Endgerät, beispielsweise in Form eines Tablet-Computers 20 oder eines Smartphones, entsprechend, was beispielhaft anhand eines in Fig. 6 gezeigten Anwendungsfalls erläutert wird, bei welchem als tragbare Benutzerschnittstelle ein mobiles Endgerät in Form eines Tablet-Computers 20 verwendet wird. Im dargestellten Beispiel wird durch die auf der Rückseite des Tablet-Computers 20 befindliche Kamera 21 ein Bild aus dem Bereich des Eingabefachs 2 der Vorrichtung 1 aufgenommen und am Display 22 wiedergegeben. Der Tablet-Computer 20 und/oder die Steuerungseinrichtung 5 ist hierbei derart ausgestaltet, dass etwaige Informationen, die das Eingabefach 2 betreffen, zusammen mit dem auf dem Display 22 wiedergegebenen Bild des betreffenden Ausschnitts der Vorrichtung 1 angezeigt werden. Im gezeigten Beispiel wird im wiedergegebenen Bild die Nachricht "INSERT BN" zusammen mit einem Pfeil angezeigt, wodurch die Bedienperson dazu aufgefordert wird, einen Banknotenstapel in das Eingabefach 2 nachzulegen, um diesen für eine weitere Bearbeitung bereitzustellen.

Bei den durch die Anzeigeeinrichtung 12 bzw. 22 angezeigten Zusatzinformationen kann es sich beispielsweise auch um depositbezogene Zusatzinformationen zu Banknoten handeln, welche für eine sogenannte Handnachbearbeitung vorgesehen sind, wie zum Beispiel spezielle Rückweisungsgründe, wie etwa ein fehlendes Sicherheitsmerkmal oder eine Seriennummer.

Alternativ oder zusätzlich kann die Anzeigeeinrichtung 12 bzw. 22 auch dazu ausgelegt sein, die mit einer in der Vorrichtung 1 vorgesehenen Sensoreinrichtung gewonnenen Bildinformationen zu einer individuellen Banknote anzuzeigen, wie zum Beispiel ein Magnetbild oder ein Infrarotbild. Alternativ oder zusätzlich können an der Anzeigeeinrichtung 12 bzw. 22 auch Bilder wiedergegeben werden, die mit einer an einem Handnachbearbeitungsplatz installierten Infrarotkamera zur Prüfung fälschungsverdächtiger Banknoten aufgezeichnet wurden. Insgesamt lässt sich hierdurch die Handnacharbeit beschleunigen, eine Erkennung von Fälschungen verbessern und nicht zuletzt die Ermüdung des Bedienpersonals reduzieren.

Mittels Datenbrille 10 und/oder mobilem Endgerät 20 sieht die Bedienperson nicht nur die jeweils betrachtete Realität, beispielsweise in Form eines Ausschnitts der Vorrichtung 1, sondern auch diesbezügliche Zusatzinformationen, die die Realität virtuell erweitern, weshalb im Zusammenhang mit der Benutzerführung bzw. Bedienung der Vorrichtung 1 durch die tragbare Benutzerschnittstelle 10 bzw. 20 auch von "Augmented Reality" oder "Virtual Reality" gesprochen werden kann. Um virtuelle Informationen lagegerecht in Echtzeit in die jeweilige reale Szene einzublenden, werden vorzugsweise drei Schritte durchlaufen: Bildaufnahme und Bildverarbeitung, Lageerkennung und Bildwiedergabe (sog. Rendering). Hierbei werden die Kamerabilder zunächst eingelesen und durch Bildverarbeitungsalgorithmen von störenden Einflüssen befreit und für die Weiterverarbeitung aufbereitet. Anhand der im aufgenommenen Kamerabild gefundenen Merkmale, wie beispielsweise Teile eines vorher bekannten Bildes, wird die Relation zwischen Kamera und erkannter Fläche berechnet. Diese Berechnung bildet die Basis für die lagegerechte Darstellung der Augmented Reality-Elemente, d.h. der jeweils zusätzlich eingeblendeten Informationen. Passend zur betrachteten Szene werden nun die virtuellen Szenenelemente im Kamerabild wiedergegeben und die entsprechend erweiterte Realität für den Betrachter sichtbar. Vorzugsweise werden die drei beschriebenen Schritte ca. 30-mal pro Sekunde wiederholt. Hierbei wird eine stets perspektivisch korrekte Darstellung der betreffenden Informationen gewährleistet.

Alternativ oder zusätzlich zu den vorstehend beschriebenen Anwendungsfällen kann die tragbare Benutzerschnittstelle 10 bzw. 20 auch zur Überwachung des Materialflusses in einem sogenannten Cash Center eingesetzt werden, indem der jeweilige Bestand verfolgt und/oder der Banknotendurchsatz in den verschiedenen Abteilungen, die Lagerabwicklung sowie die Koordination von Personal und Gütern überwacht werden. Die Ausführungen im Zusammenhang mit den in den Figuren 1 bis 6 gezeigten Beispielen gelten hierbei entsprechend.

Die tragbare Benutzerschnittstelle 10 bzw. 20 gemäß der vorliegenden Erfindung kann, je nach Ausgestaltung, einen üblicherweise am Gerät der Vorrichtung 1 vorgesehenen Bedienerbildschirm mit Touch-Screen vollständig ersetzen. Die üblicherweise am Bedienerbildschirm an der Vorrichtung 1 vorgenommenen Interaktionen können dann vollständig über die mobile Benutzerschnittstelle 10 bzw. 20 durchgeführt werden, wie zum Beispiel das Einblenden einer Meldung, eine Menüauswahl durch Erfassen der Blickrichtung der Bedienperson bzw. der Kamera 11 bzw. 21 sowie ein Quittieren der Meldung durch entsprechende Eingaben wie zum Beispiel Handgesten, Augenzwinkern oder Spracheingaben.

Alternativ oder zusätzlich zur visuellen Wiedergabe von den aktuellen Bearbeitungsvorgang betreffenden Informationen kann die Benutzerschnittstelle 10 bzw. 20 auch zur Ausgabe von Hilfsinformationen für die Bedienperson oder einen Servicetechniker ausgebildet sein, beispielsweise in Form einer Videosequenz oder von Bedienhinweisen für die Abfolge von Handgriffen. Ferner ist es möglich, kontextbezogene Informationen aus dem Service- oder Bedienungshandbuch der Vorrichtung 1 anzuzeigen. Im Zusammenhang mit Reparatur- oder Wartungsarbeiten kann ferner beispielsweise die Anzeige von Einstellpunkten oder thermografischen Bildern zum Erkennen eines etwa heiß gelaufenen Lagers oder einer Lärmquelle, beispielsweise infolge eines kaputten Lagers, von Vorteil sein.

## Patentansprüche

1. Wertdokumentenbearbeitungssystem, insbesondere für Banknoten (BN), mit einer Vorrichtung (1) zum Bearbeiten, wobei das Bearbeiten Befördern und/oder Prüfen und/ oder Zählen und/ oder Sortieren von Wertdokumenten umfasst, ebenfalls vorhanden in diesem System ist eine tragbare Benutzerschnittstelle (10, 20), welche dazu ausgebildet ist,
- Informationen (13, 23), welche die Vorrichtung (1) und/oder die Bearbeitung der Wertdokumente betreffen, zu empfangen, **dadurch gekennzeichnet, dass** die Benutzerschnittstelle weiterhin eingerichtet ist,
- ein oder mehrere Bilder der Vorrichtung (1) mittels einer Kamera (11, 21) zu erfassen,
- die empfangenen Informationen (13, 23) und/ oder erfassten Bilder wiederzugeben, wobei
die jeweils wiedergegebene Information (13, 23) davon abhängt, welches Objekt, insbesondere welcher Ausschnitt oder Teil der Vorrichtung (1), von der Kamera (11, 21) aufgenommen wird, und die angezeigte Information den von der Kamera (11, 21) aufgenommenen Bereich der Vorrichtung (1) betrifft.

2. System nach Anspruch 1, wobei die tragbare Benutzerschnittstelle (10, 20) dazu ausgestaltet ist, eine Eingabe und/ oder Auswahl von Informationen, insbesondere zur Steuerung der Vorrichtung (1), durch eine Bedienperson zu ermöglichen.

3. System nach Anspruch 1 oder 2, wobei die tragbare Benutzerschnittstelle (10) eine am Kopf einer Bedienperson anbringbare Anzeigeeinrichtung (12), insbesondere in der Form einer Brille, aufweist, welche dazu ausgebildet ist, die empfangenen Informationen (13) in zumindest einem Teil des Gesichtsfeldes der Bedienperson visuell wiederzugeben.

4. System nach Anspruch 3, wobei die tragbare Benutzerschnittstelle (10) die Kamera (11) aufweist, welche dazu ausgebildet ist, Bilder von im Gesichtsfeld der Bedienperson befindlichen Objekten zu erfassen.

5. System nach Anspruch 3 oder 4, wobei die tragbare Benutzerschnittstelle (10) dazu ausgebildet ist, in den erfassten Bildern eine von der Bedienperson ausgeübte Geste, insbesondere eine Handgeste (14), zu erkennen und daraus entsprechende Informationen, insbesondere zur Steuerung der Vorrichtung (1), abzuleiten.

6. System nach Anspruch 5, wobei die tragbare Benutzerschnittstelle (10) dazu ausgebildet ist, im Gesichtsfeld der Bedienperson ein Eingabeschema (15), insbesondere in Form einer Tastatur oder von Symbolen, wiederzugeben, und in den erfassten Bildern eine von der Bedienperson in Bezug auf das wiedergegebene Eingabeschema ausgeübte Geste (14) einer Eingabe- und/oder Auswahl zu erkennen und daraus entsprechende Informationen, insbesondere zur Steuerung der Vorrichtung (1), abzuleiten.

7. System nach Anspruch 6, wobei die tragbare Benutzerschnittstelle (10) eine Projektionseinrichtung aufweist, welche dazu ausgebildet ist, das Eingabeschema (15) auf eine Fläche, insbesondere eine Hand der Bedienperson oder eine Fläche in der Umgebung der Bedienperson, zu projizieren.

8. System nach einem der Ansprüche 3 bis 7, wobei die tragbare Benutzerschnittstelle (10) dazu ausgebildet ist, ein Bild von einem im Gesichtsfeld der Bedienperson befindlichen Objekt (16), insbesondere einem Wertdokument, einem Transportbehälter für Wertdokumente oder einer Trennkarte, zu erfassen und anhand des erfassten Bildes eine auf dem Objekt (16) befindliche Zusatzinformation (17) zu ermitteln.

9. System nach Anspruch 1 oder 2, wobei die tragbare Benutzerschnittstelle (20) als ein mobiles Endgerät, insbesondere als Tablet-Computer oder Smartphone, ausgestaltet ist, welches dazu ausgebildet ist, mindestens ein Bild von der Vorrichtung (1) zu erfassen und die empfangenen Informationen (23), welche die Vorrichtung (1) und/ oder die Bearbeitung der Wertdokumente betreffen, zusammen mit dem erfassten Bild der Vorrichtung (1) wiederzugeben.

10. Verfahren zur Bearbeitung von Wertdokumenten, insbesondere Banknoten (BN), bei welchem
- Wertdokumente in einer Vorrichtung (1) bearbeitet werden, wozu sie befördert und/ oder geprüft und/ oder gezählt und/oder sortiert, werden, wobei
- Informationen (13, 23), welche die Vorrichtung (1) und/ oder die Bearbeitung der Wertdokumente betreffen, von einer tragbaren Benutzerschnittstelle (10, 20) empfangen werden, **dadurch gekennzeichnet, dass**
- ein oder mehrere Bilder der Vorrichtung (1) von einer Kamera (11, 21) der tragbaren Benutzerschnittstelle (10, 20) erfasst werden und
- die empfangenen Informationen (13, 23) und/oder erfassten Bilder von der tragbaren Benutzerschnittstelle (10, 20) wiedergegeben werden, wobei die jeweils angezeigte Information (13, 23) davon abhängt, welches Objekt, insbesondere welcher Ausschnitt oder Teil der Vorrichtung (1), von der Kamera (11, 21) aufgenommen wird, und die angezeigte Information den von der Kamera (11, 21) aufgenommenen Bereich der Vorrichtung (1) betrifft.

## Claims

1. Valuable document processing system, in particular for banknotes (BN), having a device (1) for processing, the processing comprising conveying and/or checking and/or counting and/or sorting valuable documents, with a portable user interface (10, 20) also being present in this system and being designed
- to receive pieces of information (13, 23) relating to the device (1) and/or the processing of the valuable documents, **characterized in that** the user interface is further configured
- to take one or more pictures of the device (1) by means of a camera (11, 21),
- to reproduce the received pieces of information (13, 23) and/or pictures taken, wherein
the respectively reproduced piece of information (13, 23) depends on the object, in particular the portion or part of the device (1), which is recorded by the camera (11, 21) and the displayed piece of information relates to the region of the device (1) recorded by the camera (11, 21).

2. System according to Claim 1, wherein the portable user interface (10, 20) is designed to enable an input and/or selection of pieces of information, in particular for controlling the device (1), by an operator.

3. System according to Claim 1 or 2, wherein the portable user interface (10) has a display apparatus (12) which can be mounted on the head of an operator, especially in the form of glasses, and which is designed to reproduce the received pieces of information (13) visually in at least a portion of the visual field of the operator.

4. System according to Claim 3, wherein the portable user interface (10) has the camera (11) which is designed to take pictures of objects situated in the visual field of the operator.

5. System according to Claim 3 or 4, wherein the portable user interface (10) is designed to recognize a gesture, more particularly a hand gesture (14), made by the operator in the taken pictures and to derive appropriate pieces of information therefrom, especially with regards to the control of the device (1).

6. System according to Claim 5, wherein the portable user interface (10) is designed to reproduce an input scheme (15), in particular in the form of a keyboard or of symbols, in the visual field of the operator, and to identify in the taken pictures an input and/or selection gesture (14) made by the operator in relation to the reproduced input scheme and to derive appropriate pieces of information therefrom, especially with regards to the control of the device (1).

7. System according to Claim 6, wherein the portable user interface (10) has a projection apparatus designed to project the input scheme (15) onto a surface, in particular a hand of the operator or a surface in the surroundings of the operator.

8. System according to any of Claims 3 to 7, wherein the portable user interface (10) is configured to take a picture of an object (16) situated in the visual field of the operator, in particular a picture of a valuable document, a transport container for valuable documents or a separation card, and to ascertain a piece of additional information (17) situated on the object (16) on the basis of the picture taken.

9. System according to Claim 1 or 2, wherein the portable user interface (20) is embodied as a mobile terminal, in particular as a tablet computer or smartphone, which is designed to take at least one picture of the device (1) and to reproduce the received pieces of information (23) relating to the device (1) and/or the processing of the valuable documents together with the picture taken of the device (1).

10. Method for processing valuable documents, in particular banknotes (BN), wherein
- valuable documents are processed in a device (1), for the purpose of which they are conveyed and/or checked and/or counted and/or sorted, wherein
- pieces of information (13, 23) relating to the device (1) and/or the processing of the valuable documents are received by a portable user interface (10, 20), **characterized in that**
- one or more pictures of the device (1) are taken by a camera (11, 21) of the portable user interface (10, 20) and
- the received pieces of information (13, 23) and/or pictures taken are reproduced by the portable user interface (10, 20), wherein the respectively displayed piece of information (13, 23) depends on the object, in particular the portion or part of the device (1), which is recorded by the camera (11, 21) and the displayed piece of information relates to the region of the device (1) recorded by the camera (11, 21).

## Revendications

1. Système de traitement de documents de valeur, notamment de billets de banque (BN), ledit système comprenant un dispositif (1) de traitement, le traitement comprenant le transport et/ou la vérification et/ou le comptage et/ou le tri de documents de valeur, ce système comprenant également présent une interface utilisateur portable (10, 20) qui est conçue pour :
- recevoir des informations (13, 23) qui concernent le dispositif (1) et/ou le traitement des documents de valeur, **caractérisé en ce que** l'interface utilisateur est en outre conçue pour
- capturer une ou plusieurs images du dispositif (1) à l'aide d'une caméra (11, 21),
- reproduire les informations reçues (13, 23) et/ou les images capturées,
les informations (13, 23) reproduites dépendant de l'objet, en particulier de la portion ou partie du dispositif (1) qui est capturée par la caméra (11, 21), et l'information affichée concernant la zone du dispositif (1) qui est capturée par la caméra (11, 21).

2. Système selon la revendication 1, l'interface utilisateur portable (10, 20) étant conçue pour permettre à un opérateur de saisir et/ou de sélectionner des informations, destinées en particulier à commander le dispositif (1).

3. Système selon la revendication 1 ou 2, l'interface utilisateur portable (10) comportant un module d'affichage (12) qui peut être fixé sur la tête d'un opérateur et qui se présente notamment sous la forme de lunettes qui sont conçues pour reproduire visuellement les informations reçues (13) dans au moins une partie du champ de vision de l'opérateur.

4. Système selon la revendication 3, l'interface utilisateur portable (10) comportant la caméra (11) qui est conçue pour capturer des images d'objets situés dans le champ de vision de l'opérateur.

5. Système selon la revendication 3 ou 4, l'interface utilisateur portable (10) étant conçue pour détecter dans les images capturées un geste effectué par l'opérateur, en particulier un geste de la main (14), et pour en déduire des informations correspondantes, destinées en particulier à commander le dispositif (1).

6. Système selon la revendication 5,
l'interface utilisateur portable (10) étant conçue pour reproduire un schéma de saisie (15), notamment sous la forme d'un clavier ou de symboles, dans le champ de vision de l'opérateur, et pour détecter dans les images capturées un geste (14) de saisie et/ou de sélection effectué par l'opérateur en relation avec le schéma de saisie reproduit et pour en déduire des informations correspondantes, destinées en particulier à commander le dispositif (1).

7. Système selon la revendication 6, l'interface utilisateur portable (10) comportant un module de projection qui est conçu pour projeter le schéma de saisie (15) sur une surface, en particulier une main de l'opérateur ou une surface dans l'environnement de l'opérateur.

8. Système selon l'une des revendications 3 à 7, l'interface utilisateur portable (10) étant conçue pour capturer une image d'un objet (16) situé dans le champ de vision de l'opérateur, notamment un document de valeur, un conteneur de transport de documents de valeur ou une carte de séparation, et pour déterminer une information supplémentaire (17) située sur l'objet (16), sur la base de l'image capturée.

9. Système selon la revendication 1 ou 2, l'interface utilisateur portable (20) étant conçue comme un terminal mobile, en particulier comme une tablette ou un Smartphone, qui est conçu pour capturer au moins une image du dispositif (1) et pour reproduire les informations reçues (23), qui concernent le dispositif (1) et/ou le traitement des documents de valeur, conjointement avec l'image capturée du dispositif (1).

10. Procédé de traitement de documents de valeur, notamment de billets de banque (BN), dans lequel
- les documents de valeur sont traités dans un dispositif (1), ce pour quoi ils sont transportés et/ou vérifiés et/ou comptés et/ou triés,
- les informations (13, 23), qui concernent le dispositif (1) et/ou le traitement des documents de valeur, étant reçues par une interface utilisateur portable (10, 20), **caractérisé en ce que**
- une ou plusieurs images du dispositif (1) sont capturées par une caméra (11, 21) de l'interface utilisateur portable (10, 20) et
- les informations reçues (13, 23) et/ou les images capturées sont reproduites par l'interface utilisateur portable (10, 20), les informations (13, 23) affichées dépendant de l'objet, en particulier de la portion ou partie du dispositif (1), qui est capturé par la caméra (11, 21), et l'information affichée concernant la zone du dispositif (1) qui est capturée par la caméra (11, 21) .
